# EUROPEAN PATENT SPECIFICATION

(11) **EP 3 045 248 B1**
(45) Date of publication and mention of the grant of the patent: **06.06.2018**
(21) Application number: 16151373.4
(22) Date of filing: 14.01.2016
(51) Int. Cl.: B23D 47/04, B27B 5/22

(54) **CUTTING MACHINE FOR WOODEN ARTICLES**
SCHNEIDEMASCHINE FÜR HOLZARTIKEL
MACHINE DE COUPE POUR ARTICLES EN BOIS

(30) Priority: 14.01.2015 IT TO20150032; 14.01.2015 IT TO20150033; 14.01.2015 IT TO20150034
(43) Date of publication of application: 20.07.2016
(73) Proprietor: Collino Costruzioni S.r.l. con Unico Socio, 12038 Savigliano (CN) (IT)
(72) Inventor: COLLINO, Adriano, 12038 SAVIGLIANO (IT)
(74) Representative: Mola, Edoardo

(56) References cited:
- EP-A1- 2 705 937
- DE-C- 823 037
- DE-U1- 29 607 119
- DE-U1-202010 010 540
- FR-A- 883 888
- US-A- 73 343
- US-A- 446 510
- US-A- 4 050 339

## Description

The present invention relates to a cutting machine for trunks, elongated or oblong elements according to the preamble of claim 1, in particular oblong wooden elements, for example branches or logs, preferably having a maximum diameter of 150 mm, or the like. Such a cutting machine is known from US73343A1.

It is known a cutting machine comprising a motor-driven disk saw, rotatable around a fixed axis, a rotary drum provided with longitudinal, angularly equidistant channels and a conveyor belt arranged on the bottom of the drum for collecting the cut pieces.

The drum sets in rotation the channels, and the disk saw interferes with the channels so that a trunk, after having been inserted in a channel, is transported towards the disk saw and cut by this latter after the rotation of the drum. During cutting, the trunk is pushed by the disk saw against a side wall of the channel and, therefore, the speed of advancement of the trunk with respect to the disk saw is controlled by the rotation of the drum. In particular, the disk saw is housed in a circumferential groove of the drum for interfering with the channels so that, in at least one angular position of the drum, a cross-section of the channels is entirely facing the disk saw for fully cutting the trunks inserted in the respective channels. When the disk saw has finished cutting, one of the wooden pieces
arranged between the disk saw and the conveyor belt falls by gravity on this latter through a bottom aperture of its respective channel. One of the wooden pieces arranged on the opposite side of the conveyor belt with respect to the disk saw falls by gravity inside the channel, to be cut again after a complete revolution of the drum.

Examples of known cutting machines are disclosed in US73343 A and EP2705937 A1.

The aim of the present invention is to satisfy at least in part the aforesaid requirements.

The aim of the present invention is achieved by means of a cutting machine according to claim 1.

Optionally, such a machine may further comprise a loading mouth for loading the oblong elements in the respective channels, the extensible tie rod includes an actuation to adjust the length of the extensible tie rod and the actuation is accessible by a user through the loading mouth.

Optionally, the motor is movable and is carried by the stop and the machine comprises guides for blocking the rotation and for allowing the translation of the stop.

Optionally, the machine comprises a frame, and the drum body is mounted on the frame through a radial and axial bearing surrounding the drum body.

Optionally, the drum body defines a compartment housing the disk saw and intercepting the channel (s), and the bearing is arranged between the compartment and a loading access to the channels for the oblong elements.

Optionally, the motor is hydraulic, the machine comprises a conveyor belt to collect the pieces cut by the disk saw; a further hydraulic motor connected in series to the motor; and a bypass line of the further hydraulic motor and non-return valves, the non-return valves being arranged in parallel on the bypass line and between the hydraulic motors so that, if the motor is energized to reverse the rotation of the drum body, the further hydraulic motor is bypassed.

Optionally, in this machine, the drum body defines a compartment housing the disk saw and intercepting the channel(s), and the bearing is arranged between the compartment and a loading access to the channels for the oblong elements. The machine comprises a motor to set in rotation the drum body, and a connection radially internal to the one or more channels to connect to the rotation the drum body and the motor. According to the invention, the machine comprises a stop to contact the oblong elements housed in the channels before the cutting, the channels are inclined so that the oblong elements rest by gravity on the stop, and the motor is arranged on the opposite side of the drum body with respect to the stop.

Optionally, the machine comprises a loading mouth for loading the oblong elements in the respective channels, the extensible tie rod includes an actuation to adjust the length of the extensible tie rod, and the actuation is
accessible by a user through the loading mouth.

Optionally, the motor is movable and is carried by the stop, and the machine comprises guides for blocking the rotation and for allowing the translation of the stop.

Optionally, the motor is hydraulic, the machine comprises a conveyor belt to collect the pieces cut from the disk saw; a further hydraulic motor connected in series to the motor; and a bypass line of the further hydraulic motor and non-return valves, the non-return valves being arranged in parallel on the bypass line and between the hydraulic motors so that, if the motor is energized to reverse the rotation of the drum body, the further hydraulic motor is bypassed.

The invention will be now described with reference to the accompanying drawings, which illustrate non-limiting embodiments and refer to:
- Figure 1: a perspective view of a cutting machine according to the present invention;
- Figure 2: a section along a vertical plane passing through the axis of rotation of the drum of the machine of Figure 1 in a first working condition;
- Figure 3: an axonometric view of the machine of Figure 1 with parts removed for clarity's sake;
- Figure 4: the section of Figure 2 in a second working condition;
- Figure 5: a section along the plane of Figure 2 of a cutting machine according to a further embodiment of the present invention;
- Figure 6: an exploded view of the whole machine of Figure 4.

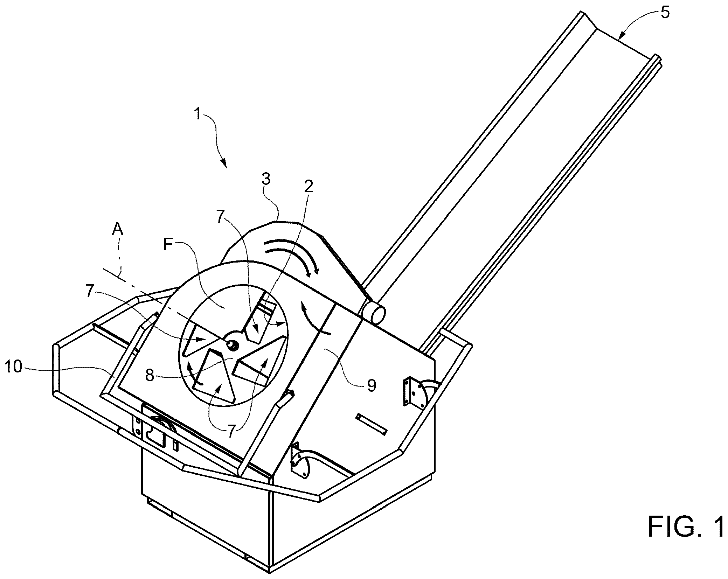

Figure 1 indicates with 1, as a whole, a cutting machine 1 comprising a loading mouth 2 to load one or more trunks, planks or other longitudinal wooden elements, a protective shell 3 for a disk saw 4 and a conveyor belt 5 having a loading portion 6 arranged for receiving wooden pieces downloaded by gravity after having been cut by the disk saw 4.

The loading mouth 2 allows access to channels 7 set in rotation by a drum body 8 having an axis of rotation A parallel to the axis of rotation of the disk saw 4.

The loading mouth 2 is defined by a hinged door, for example openable by means of a hinge. The door hinge 9 is oblique with respect to the axis A, so that the door 9, once opened, makes accessible a compartment VI housing an upper portion of the drum body 8.

The cutting machine 1 also comprises a handle 10 to operate an emergency stop device of the disk saw 4, already known and not further described hereinafter.

The drum body 8 includes an access drum 11, arranged between the loading mouth 2 and a middle plane of the disk saw 4, and a distal drum 12, arranged on the opposite side of the access drum 11 with respect to the disk saw 4. The distal drum 12 is opposed to the loading mouth 2. the access drum 11 and the distal drum 12 are rigidly connected in the circumferential direction, but are spaced apart in a direction parallel to the axis A to define a circular crown compartment V2 partially housing the disk saw 4. Preferably, the access drum 11 and the distal drum 12 are rigidly connected by means of a tubular element surrounded by the channels 7 and preferably parallel to them. The channels 7 are defined by the drum body 8 between the access drum 11 and the distal drum 12 and may have same or different cross sections upstream and downstream of the compartment V2. The disk saw 4 intercepts the channels 7 through the compartment V2, thus cutting a wooden piece when the drum body 8 is in rotation.

The drum body 8 is supported by a fixed frame through a bearing 14, preferably a rolling element bearing and/or a combination of several bearings, which bears radial and axial loads with reference to the axis A. Preferably, the frame comprises a plurality of uprights 15 which support a saddle S, and the bearing 14 comprises a rotatable ring connected to a flange 16 rotationally integral to the drum body 8, in particular integral to the access drum 11, and a fixed ring connected to the frame, preferably the saddle S. Advantageously, the bearing 14 is housed in the compartment V1 and can be inspected when the door 9 is opened. Moreover, the bearing 14 is rigidly fixed, for example by bolts, to the saddle S along an arc smaller than 360°, for example comprised between 90° and 210° to allow the best compromise between a simple assembly of the drum body 8, which can rest on the saddle S by approaching it along the vertical direction by means of a winch, and an extended support of the bearing 14 on the saddle S to avoid excessively high localized loads. Therefore, a fixed ring of the bearing 14 has a portion resting on the saddle S and a portion extending in cantilever fashion from the saddle S. Furthermore, the weight of the drum body 8 and of any further element carried by the drum body 8 is transferred to the frame through the bearing 14, which is preferably fastened to the drum body 8 in an area between the compartment V2 and the loading mouth 2. In this way, the bearing 14 can be maintained, for example greased, in a simple way. Moreover, the bearing 14 guides the rotation of the drum 8, and supports this latter in the radial direction and against any possible overturning, for example around a horizontal axis, coplanar with the axis A. This leaves a space in the area between the drum body 8 and the conveyor belt 5. Furthermore, the bearing 14 surrounds the drum body 8.

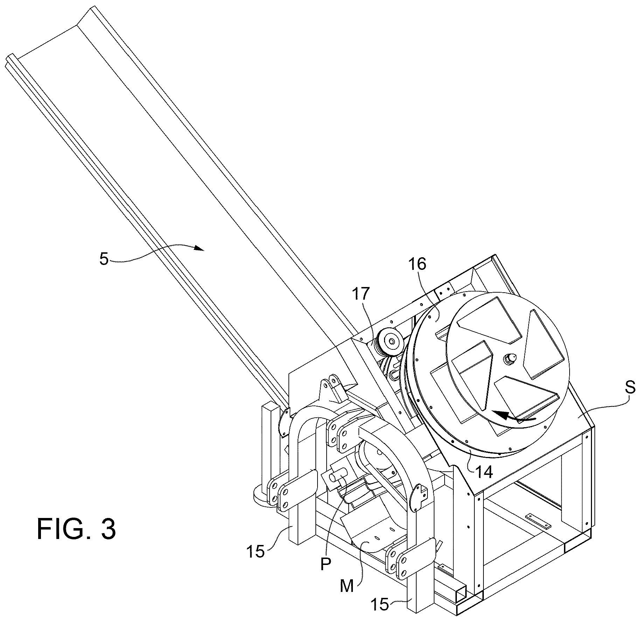

The frame also carries the disk saw 4 through bearings 17 rotatable around an axis parallel to, but spaced from, the axis A. The disk saw 4 is operated through a transmission, e.g. a belt, by a motor M (Figure 3) and/or a power takeoff P. The motor M and/or the power takeoff P also operate a hydraulic pump (not shown) arranged in parallel to the disk saw 4.

The cutting machine 1 further comprises a stop 18 translating in a direction parallel to the axis A and comprising a plate facing at least one channel 7 in at least one angular position of the drum body 8. The stop 18 is rotationally fixed around the axis A and is preferably arranged on the opposite side of the disk saw 4 with respect to the axis A so as to define a bottom for each channel 7 in the angular stroke section run through by each channel 7 after passing the disk saw 4. The stop 18 faces the distal drum 12 along an angular sector of about 180° and defines a window 19 for disposing a trunk portion by gravity towards the conveyor belt 5 after cutting.

The stop 18 translates in a direction parallel to the axis A by means of double effect guides 20, in order to prevent the rotation of the stop 18, both clockwise and counterclockwise. Preferably, the double effect guides define rectilinear grooves 20 housing a pin 21, fixed with respect to the stop 18.

The location of the stop 18 with respect to the drum body 8 is adjustable to vary, preferably continuously, the length of the wooden pieces. Preferably, the stop 18 is fastened to the drum body 8 by means of an extensible tie rod 22 defining the position of the stop 18 along the double effect guides 20. The extensible tie rod 22 comprises a head 23 connected to the drum body 8 and a bottom 24, opposite to the head 23 along the axis A, fixed to the stop 18.

Advantageously, the extensible tie rod 22 comprises an actuation 25, for example a hexagon, square, etc., head accessible through the loading mouth 2 and preferably concentric to the drum body 8. The actuation 25 allows to vary the length of the tie rod 22 manually and/or using a tool. Furthermore, the extensible tie rod 22 is surrounded by the channels 7, thus having a position less subject to contamination by, for example, cutting process residues.

According to a preferred embodiment of the present invention, the extensible tie rod 22 comprises a screw-nut mechanism having a rotatable element 26 set in rotation by the actuation 25 and a translating portion 27 engaged in the rotatable element 26 and fastened to the stop 18. The extensible tie rod 22 is coupled, rigid to translation and free to rotation, to the stop 18 through a coupling 28 comprising a first and a second bearing, preferably rolling element bearings, with respective fixed rings rigidly coupled to the stop 18 through a sleeve 29 and with rotatable rings coupled to the extensible tie rod 22. The sleeve 29 is concentric to the bottom 24 of the extensible tie rod 22. The extensible tie rod 22 is housed in the tubular element 13 that delimits the lower radius of the compartment V2, thus protecting the extensible tie rod against the sawdust generated by the disk saw 4.

Preferably, the translating portion 27 is connected to the drum body 8 by means of a prismatic or spline coupling or any similar sliding coupling. In particular, the translating portion 27 includes a polygonal insert 30, in the illustrated example having a square profile in plan view, housed in a channel 31 of the drum body 8. Preferably, the channel 31 is an inner surface of the tubular element 13. The channel 31 defines a screen to protect the extensible tie rod 22 from the debris, for example, from the debris produced by cutting. When the rotatable element 26 is rotated through the actuation 25, the polygonal insert 30 is rotationally blocked by the channel 31, which has for example a square cross section for this purpose, and flows, together with the translating portion, upwards or downwards according to the direction of rotation of the actuation 25. Consequently, the stop 18 is moved along the double effect guides 20. According to the invention, the cutting machine 1 further comprises a motor 32 to set in rotation the drum body 8, arranged on the opposite side of the drum body 8 with respect to the stop 18 so that this latter defines an even partial barrier of protection against sawdust, chips or other material falling by gravity from the channels 7. Preferably, the motor 32 is on the stop 18 and moves with it. Furthermore, the motor 32 is fed by the hydraulic pump (not shown) operated through the motor M and/or the power takeoff P.

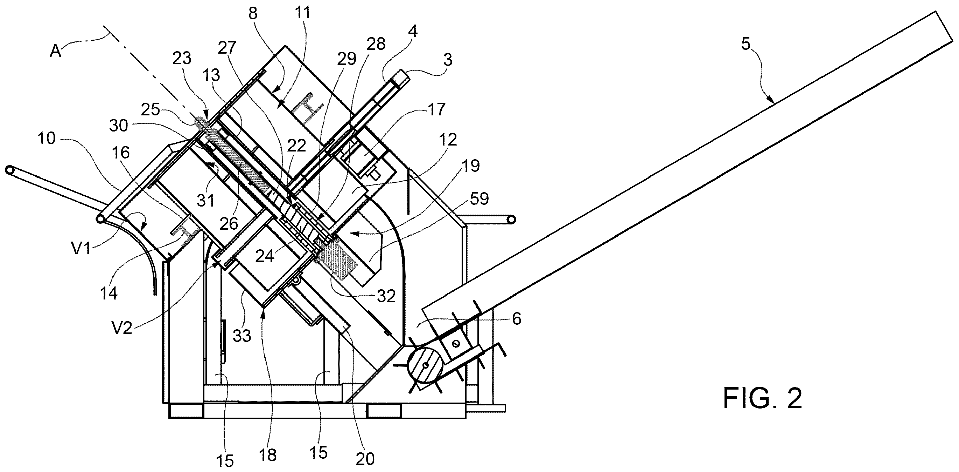

Advantageously, the extensible tie rod 22 transmits a torsional torque from the motor 32 to the drum body 8. For example, the driving torque of the motor 32 is transmitted to the translating element 27 and, by this latter, to the drum body 8. In the example of Figure 2, the translating portion 27 transmits a torque to the drum body 8 through the prismatic coupling comprising the polygonal insert 30 and the tubular element 13. Alternatively, the driving torque can be transmitted to the drum body 8 also by means of the rotatable element 26. In this case, when the extensible tie rod 22 includes a screw-nut mechanism, the thread is irreversible so that the tie rod can be lengthened or shortened only by applying a torque to the actuation 25. Consequently, the driving torque generated by the motor 32 is transmitted to the rotatable element 26 through the translating portion 27 and, in this operating condition, the threads of the screw-nut coupling remain fixed also during the operation of the motor 32.

According to a preferred embodiment of the present invention, the motor 32 is coaxial to the axis A and is in direct contact with the extensible tie rod 22. For example, as shown in Figure 2, a motor stator 32 is fixed to the stop 18 and a rotor of the motor 32 is connected in direct contact on the drum body 8 by means of the translating portion 27. The connection in direct contact between the motor 32 and the drum body 8 provides a unitary transmission ratio and the absence of gears. In particular, the rotor of the motor 32 is connected to the translating portion 27 to set in rotation the drum body 8.

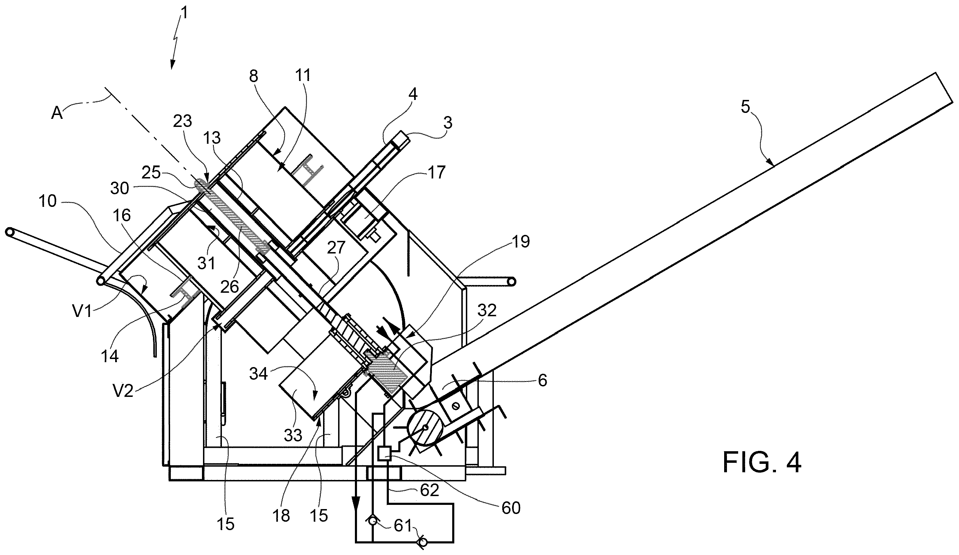

Figure 4 shows a configuration of the cutting machine 1 wherein the length of the wooden piece increases if compared to the one obtainable with the stop 18 arranged according to Figure 2. In particular, in Figure 4, the stop 18 is lowered towards the loading portion 6 of the conveyor belt 5. An edge 33 of the stop 18 is also visible to define a collecting area 34 for machining residues such as chips, sawdust and the like, falling by gravity from the channels 7 during use. When the stop 18 is raised (Figure 2), the edge 33 surrounds the distal drum 12 along a circular sector interrupted by the window 19.

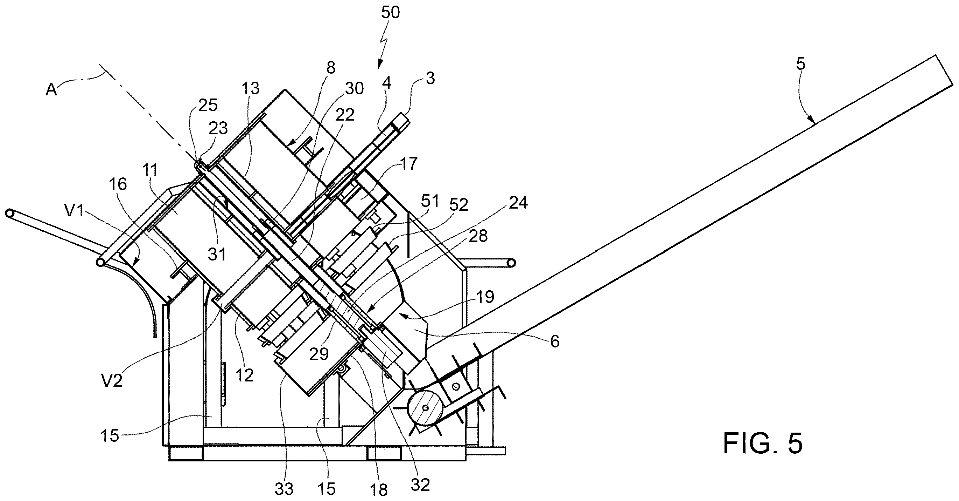

Figure 5 shows a cutting machine 50 according to a further embodiment of the present invention.

Elements identical to those described for the cutting machine 1 will be indicated below by the same reference numbers used in the previous paragraphs.

The cutting machine 50 is identical to the cutting machine 1, with the exception of what specified in the following. In particular, the cutting machine 50 comprises an extensible guide set in rotation by the drum body 8 and adapted to guide the wooden pieces before and after cutting, in particular when the stop 18 is in a lowered position (Figure 5).

The extensible guide includes sectors 51, 52 movable with respect to each other and/or with respect to the drum body 8. Each sector 51, 52 has a number of openings 53 equal to the number of channels 7 defined by the drum body 8, and a cut piece passes through the relative opening 53 when it is directed towards the conveyor belt 5 through the window 19. The sectors 51, 52 are movable between a packed position toward the distal drum 12 and a spaced position (shown in Figure 5) wherein the sector 51 is spaced from the distal drum 12 and the sector 52 is spaced from the sector 51. It is also possible an intermediate position wherein the sector 51 is spaced from the distal drum 12 and the sector 52 is packed against the sector 51. It is also possible to add or remove extra movable sectors.

The sectors 51, 52 reach the spaced position by gravity and are brought in the packed position by the stop 18. Therefore, when the sectors 51, 52 are packed, there is an interface along which the sectors 51, 52 may rotate on one side, while the stop 18 is rotatably blocked by the double effect guides 20 (not visible in Figure 5, but identical to the guides of Figure 2) on the other side. For example, the interface is defined by a sliding friction ring arranged in contact with one or more shoes when at least the sector 52 is not at a maximum distance from the sector 51. In particular, the ring is carried by the sector 52 and the shoe or shoes are carried by the stop 18.

The sectors 51, 52 are set in rotation by the drum body 8 by means of guide bars fastened to one of the sectors 51, 52 and to the drum body 8. For example, bars 54 fastened to the sector 51 and bars 55 fastened to the sector 52 and longer than the bars 54 are provided. The bars 54, 55 are longitudinally slidable with respect to the drum body 8 and the bars 55 are also slidable with respect to the sector 51. The bars 54, 55 are coupled to bushings and to other low-friction sliding elements to facilitate translation.

The maximum translation distance in the longitudinal direction with respect to A can be defined by mechanical stops arranged on the bars 54, 55.

It is also possible that the bars 54, 55 are fixed relative to the drum body 8, and that the sectors 51, 52 carry the low-friction bushings and slide on respective bars.

Alternatively or in combination, it is possible to provide eyelets, chains, belts and the like having a predefined length and arranged between the drum body 8 and the sector 51 and/or between the sector 51 and sector 52. Such connections collapse or do not resist to compression and allow to reach the packed position; and they are in tension due to the weight of the sectors 51, 52 in the spaced position.

Each opening 53 is circumscribed within a peripheral edge 56 which has, in a direction parallel to the axis A, a profile converging towards the inside of the opening and towards the stop 18 to facilitate the sliding by gravity of the wooden pieces, the logs and the cut pieces.

In this way, during cutting, the wood piece is well supported by the access drum 11 and by the distal drum 12 which provide a broad and firm support. The sectors 51, 52 guide the timber during the falling step with a reduced contact surface, so as to reduce considerably the friction and facilitate the sliding of the wooden piece toward the conveyor belt 5.

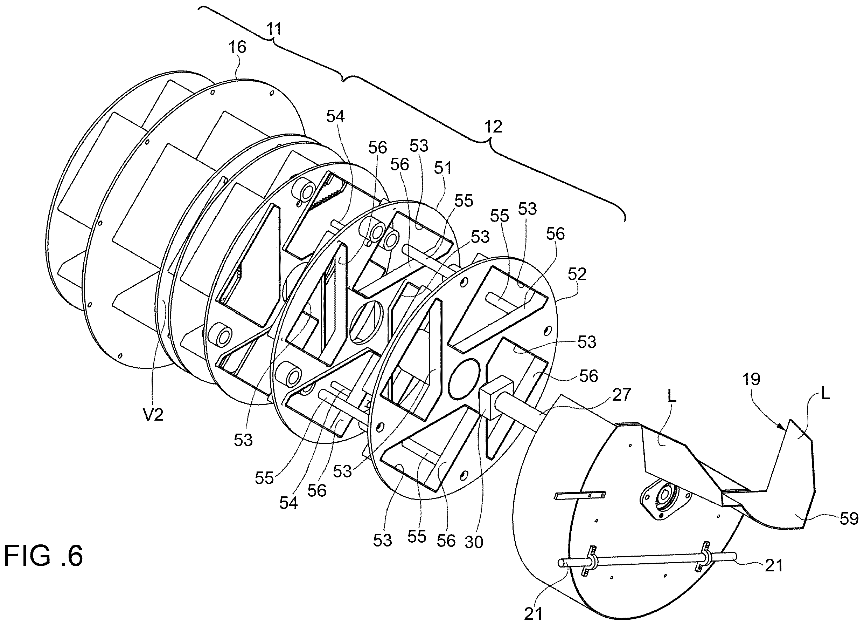

Figure 6 also shows that the window 19 faces a slide 59 beneath which the motor 32 is arranged to protect it against a direct contact with the wooden pieces heading towards the conveyor belt 5. The slide 59 comprises side walls L to further improve the safety of the motor 32. The slide 59 is movable together with the stop 18 by adjusting the extensible tie rod 22.

The advantages obtained by the cutting machine 1 are the following.

The bottom 24 is radially internal to the channels 7, namely internal to the circular path defined by the channels 7 when the drum body 8 rotates, and this allows to compact the transmission between the motor 32 and the drum body 8. This reduces the chances of failure and simplifies the maintenance operations. According to the invention, the motor 32 is arranged on the opposite side of the drum body 8 with respect to the stop 18 to be easily accessible in case of maintenance at any position of the stop 18. Moreover, the motor 32 is protected against any impact with the wooden pieces which have been cut or which have to be cut by the stop 18.

The adjustment of the position between the drum body 8 and the stop 18 by means of the extensible tie rod 22 is simple, compact and not very subject to shocks and contamination by means of wooden and/or cut debris.

The translating form-fitting coupling between the translating portion 27 and the tubular element 13 ensures the safe transmission of high torques in order to increase the life of the cutting machine 1.

Through the bearing 14, the drum body 8 substantially rests on the saddle S by simplifying the geometry of the frame of the cutting machine and making available routes of access for the maintenance of the motor 32. Moreover, the bearing 14 is arranged in a position which simplifies the maintenance.

Finally, it is clear that the cutting machine according to the present invention may be modified or varied without departing from the scope of protection defined by the attached claims.

The cutting machine 1 may include a brush F to close the top of the channels 7 in the angular sector related to the axis A, where the cutting is performed. This counteracts the output of any processing waste, such as sawdust or splinters, from the loading mouth 2.

In some cases it may be desirable to reverse the direction of rotation of the drum body 8 and, at the same time, to control the conveyor belt 5 so that the pieces loaded on it keep being moved away from the drum body 8, or are still, or do not come closer to the drum body 8 by falling from the conveyor belt 5.

To this purpose, as shown in Figure 4, a cutting machine comprising the disk saw 4, the conveyor belt 5, the drum body 8 and a hydraulic motor to set in rotation the drum body 8 also comprises a further hydraulic motor 60 (schematically shown in Figure 4) to operate the conveyor belt 5. Preferably, the hydraulic motor of the drum 8 and the motor body 60 are connected in series so that as the drum body 60 rotates to cut the wooden pieces, the conveyor belt 5 picks up the pieces falling by gravity from the drum body 8 (the arrows indicated on the circuit of Figure 4 refer to this operation). It is also present a combination of non-return valves 61 and a bypass line 62 of the hydraulic motor 60 configured as shown in Figure 4 so that, when the hydraulic motor of the drum body 8 changes direction of rotation, the motor 60 is bypassed by the flow of hydraulic fluid. In this way, the conveyor belt 5 does not reverse its direction so that one or more pieces fall on the drum body 8. It is possible that the user reverses the sense of rotation 8 of the drum body 8, for example to free a trunk from the disk saw 4. In this case, the arrows show in Figure 4 are reversed. According to the previously described arrangement, it is possible to prevent the wooden pieces loaded on the conveyor belt 5 from returning to the drum body 8 when the direction of rotation of this latter is reversed with respect to the cutting direction. Furthermore, when the hydraulic motors of the drum body 8 and of the conveyor belt 5 are arranged in series, it is possible to provide a single control device for both of them. This control device may comprise a distribution valve hand-operated by the user and arranged, for example, close to the loading mouth 2. The cutting machine comprising the hydraulic circuit described in this paragraph may include all or some of the further components of the previously described cutting machine 1. With reference to the diagram in Figure 4, the valve 61 arranged in series with the motor 60 can also be arranged downstream of this latter with reference to the feeding direction of the flow indicated by the arrows.

It is also possible to connect the bottom 24 to the motor 32 in more ways than those shown. For example, the motor 32 can be connected to the drum body 8 and can be carried by this latter. In this case, the motor 32 has a fixed position and the extensible tie rod 22 supports and regulates only the stop 18. A rigid connection between the motor 32 and the uprights 15 or other parts of the frame can also be provided to ensure the rotation of the drum body 8 without interfering with the positions of the stop 18.

It is possible that a gearbox, in particular a speed reducer, is interposed between the motor 32 and the drum body 8 to decrease the load on the motor 32.

## Claims

1. A cutting machine (1) for oblong elements comprising a drum body (8) defining one or more channels (7), a saw (4) intercepting the channels (7) for cutting an oblong element housed in the respective channel (7) while the drum body (8) is rotating in one direction, the saw (4) and the drum body (8) having respective parallel, fixed and mutually spaced apart axes of rotation, and a motor (32) to set in rotation the drum body (8), said cutting machine further comprising a connection (27), radially internal to said one or more channels (7), for connecting to the rotation the drum body (8) and the motor (32), **characterized in that** it comprises a stop (18) for contacting the oblong elements housed in the channels (7) before the cutting, **in that** the channels (7) are inclined so that the oblong elements rest by gravity on the stop (18), and **in that** the motor (32) is arranged on the opposite side of the drum body (8) with respect to the stop (18).

2. A cutting machine according to claim 1, **characterized in that** it comprises an extensible tie rod (22) for connecting the drum body (8) and the stop (18) and for allowing a user to adjust the distance between the stop (18) and the drum body (8).

3. A cutting machine according to claim 2, **characterized in that** the extensible tie rod (22) comprises the connection (27).

4. A cutting machine according to claim 3, **characterized in that** the connection (27) is a translating portion of the extensible tie rod (22) and is form-fitted in a tubular element (13) of the drum body (8).

5. A cutting machine according to any one of the preceding claims from 2 to 4, **characterized in that** it comprises a loading mouth (2) for loading the oblong elements in the respective channels (7), **in that** the extensible tie rod (22) comprises an actuation (25) for adjusting the length of the extensible tie rod (22), and **in that** the actuation (25) is accessible by a user through the loading mouth (2).

6. A cutting machine according to any one preceding claims, **characterized in that** the motor (32) is movable and is carried by the stop (18), and **in that** it comprises guides (20) for blocking the rotation and allowing the translation of the stop (18).

7. A cutting machine according to any one of the preceding claims, **characterized in that** it comprises a frame (15) and **in that** the drum body (8) is mounted on the frame (15) by means of a radial and axial bearing (14) surrounding the drum body (8).

8. A cutting machine according to claim 7, **characterized in that** the drum body (8) defines a compartment (V2) that houses the disk saw (4) and intercepts the channel or channels (7), and **in that** the bearing (14) is arranged between the compartment (V2) and a loading access (2) to the channels (7) for the oblong elements.

9. A cutting machine according to any one of the preceding claims, **characterized in that** the motor (32) is hydraulic, **in that** it comprises a conveyor belt (5) for collecting the sections cut by the disk saw (4), **in that** it comprises a further hydraulic motor (60) connected in series to the motor (32), and **in that** it comprises a bypass line (62) of the further hydraulic motor (60) and non-return valves (61), the non-return valves (61) being arranged in parallel on the bypass line (62) and between the hydraulic motors (32, 60) so that if the motor (32) is fed to invert the rotation of the drum body (8), the further hydraulic motor (60) is bypassed.

10. A cutting machine (1) for oblong elements, according to any one of the preceding claims,, **characterized in that** it comprises a radial and axial bearing (14) surrounding the drum body (8) to mount the drum body (8) on the frame (15).

## Patentansprüche

1. Schneidemaschine (1) für längliche Elemente, umfassend: einen Walzenkörper (8), der einen oder mehrere Kanäle (7) definiert; eine Säge (4), die die Kanäle (7) zum Schneiden eines länglichen Elements, das in dem jeweiligen Kanal (7) untergebracht ist, unterbricht, während sich der Walzenkörper (8) in einer Richtung dreht, wobei die Säge (4) und der Walzenkörper (8) jeweils parallele, feste und voneinander beabstandete Drehachsen aufweisen; und einen Motor (32) zum Drehen des Walzenkörpers (8), wobei die Schneidmaschine ferner eine Verbindung (27) aufweist, radial innen zu dem einen oder den mehreren Kanälen (7), um den Walzenkörper (8) und den Motor (32) mit der Drehung zu verbinden, **dadurch gekennzeichnet, dass** sie einen Anschlag (18) zum Kontaktieren der in den Kanälen (7) aufgenommenen länglichen Elemente vor dem Schneiden umfasst, dass die Kanäle (7) so geneigt sind, dass die länglichen Elemente durch Schwerkraft auf dem Anschlag (18) aufliegen, und dass der Motor (32) auf der dem Anschlag (18) gegenüberliegenden Seite des Walzenkörpers (8) angeordnet ist.

2. Schneidemaschine nach Anspruch 1, **dadurch gekennzeichnet, dass** sie eine ausziehbare Zugstange (22) zum Verbinden des Walzenkörpers (8) mit dem Anschlag (18) und zum Einstellen des Abstandes zwischen dem Anschlag (18) und dem Walzenkörper (8) umfasst.

3. Schneidemaschine nach Anspruch 2, **dadurch gekennzeichnet, dass** die ausziehbare Zugstange (22) die Verbindung (27) umfasst.

4. Schneidemaschine nach Anspruch 3, **dadurch gekennzeichnet, dass** die Verbindung (27) ein translatorischer Teil der ausziehbaren Zugstange (22) ist und in ein rohrförmiges Element (13) des Walzenkörpers (8) eingepasst ist.

5. Schneidemaschine nach einem der vorangehenden Ansprüche 2 bis 4, **dadurch gekennzeichnet, dass** sie einen Ladezugang (2) zum Einlegen der länglichen Elemente in die jeweiligen Kanäle (7) aufweist, dass die ausziehbare Zugstange (22) eine Betätigung (25) zum Einstellen der Länge der ausziehbaren Zugstange (22) aufweist und dass die Betätigung (25) für einen Benutzer durch den Ladezugang (2) zugänglich ist.

6. Schneidemaschine nach einem der vorangehenden Ansprüche, **dadurch gekennzeichnet, dass** der Motor (32) beweglich ist und von dem Anschlag (18) getragen wird, und dass sie Führungen (20) zum Blockieren der Drehung und zum Ermöglichen der Verschiebung des Anschlags (18) aufweist.

7. Schneidemaschine nach einem der vorangehenden Ansprüche, **dadurch gekennzeichnet, dass** sie einen Rahmen (15) aufweist und dass der Walzenkörper (8) mittels eines den Walzenkörper (8) umgebenden Radial- und Axiallagers (14) an dem Rahmen (15) befestigt ist.

8. Schneidemaschine nach Anspruch 7, **dadurch gekennzeichnet, dass** der Walzenkörper (8) ein Fach (V2) definiert, das die Kreissäge (4) aufnimmt und den oder die Kanäle (7) unterbricht, und dass das Lager (14) zwischen dem Fach (V2) und einem Ladezugang (2) zu den Kanälen (7) für die länglichen Elemente angeordnet ist.

9. Schneidemaschine nach einem der vorangehenden Ansprüche, **dadurch gekennzeichnet, dass** der Motor (32) hydraulisch ist, dass sie ein Förderband (5) zum Sammeln der von der Kreissäge (4) geschnittenen Abschnitte umfasst, dass sie einen weiteren Hydraulikmotor (60) umfasst, der in Reihe mit dem Motor (32) verbunden ist, und dass sie eine Bypassleitung (62) des weiteren Hydraulikmotors (60) und Rückschlagventile (61) umfasst, wobei die Rückschlagventile (61) parallel auf der Bypassleitung (62) und zwischen den Hydraulikmotoren (32, 60) angeordnet sind, so dass, wenn der Motor (32) zum Umkehren der Drehung des Walzenkörpers (8) gespeist wird, der weitere Hydraulikmotor (60) umgangen wird.

10. Schneidemaschine (1) für längliche Elemente nach einem der vorangehenden Ansprüche, **dadurch gekennzeichnet, dass** sie ein radiales und axiales Lager (14) umfasst, das den Walzenkörper (8) umgibt, um den Walzenkörper (8) am Rahmen (15) zu befestigen.

## Revendications

1. Machine de coupe (1) pour éléments oblongs comprenant un corps de tambour (8) définissant un ou plusieurs canaux (7), une scie (4) interceptant les canaux (7) pour couper un élément oblong logé dans le canal respectif (7) pendant que le corps de tambour (8) tourne dans une direction, la scie (4) et le corps de tambour (8) ayant des axes de rotation respectifs parallèles, fixes et mutuellement espacés, et un moteur (32) pour mettre en rotation le corps de tambour (8), ladite machine de coupe comprenant en outre une liaison (27), radialement interne audit au moins un canal (7), pour relier à la rotation le corps de tambour (8) et le moteur (32), **caractérisée en ce qu'**elle comprend une butée (18) pour mettre en contact les éléments oblongs logés dans les canaux (7) avant la coupe, **en ce que** les canaux (7) sont inclinés de sorte que les éléments oblongs reposent par gravité sur la butée (18) et **en ce que** le moteur (32) est disposé sur le côté opposé du corps de tambour (8) par rapport à la butée (18).

2. Machine de coupe selon la revendication 1, **caractérisée en ce qu'**elle comprend une biellette extensible (22) pour relier le corps de tambour (8) et la butée (18) et pour permettre à un utilisateur de régler la distance entre la butée (18) et le corps de tambour (8).

3. Machine de coupe selon la revendication 2, **caractérisée en ce que** la biellette extensible (22) comprend la liaison (27).

4. Machine de coupe selon la revendication 3, **caractérisée en ce que** la liaison (27) est une partie de translation de la biellette extensible (22) et est ajustée dans un élément tubulaire (13) du corps de tambour (8).

5. Machine de coupe selon l'une quelconque des revendications 2 à 4, **caractérisée en ce qu'**elle comprend une bouche de chargement (2) pour charger les éléments oblongs dans les canaux (7) respectifs, **en ce que** la biellette extensible (22) comprend un actionnement (25) pour ajuster la longueur de la biellette extensible (22), et **en ce que** l'actionnement (25) est accessible par un utilisateur à travers la bouche de chargement (2).

6. Machine de coupe selon l'une quelconque des revendications précédentes, **caractérisée en ce que** le moteur (32) est mobile et est porté par la butée (18), et **en ce qu'**elle comprend des guides (20) pour bloquer la rotation et permettre la translation de la butée (18).

7. Machine de coupe selon l'une quelconque des revendications précédentes, **caractérisée en ce qu'**elle comprend un châssis (15) et **en ce que** le corps de tambour (8) est monté sur le châssis (15) au moyen d'un palier radial et axial (14) entourant le corps de tambour (8).

8. Machine de coupe selon la revendication 7, **caractérisée en ce que** le corps de tambour (8) définit un compartiment (V2) qui abrite la scie à disque (4) et intercepte le ou les canaux (7), et **en ce que** le palier (14) est disposé entre le compartiment (V2) et un accès de chargement (2) aux canaux (7) pour les éléments oblongs.

9. Machine de coupe selon l'une quelconque des revendications précédentes, **caractérisée en ce que** le moteur (32) est hydraulique, **en ce qu'**elle comprend une bande transporteuse (5) pour collecter les sections coupées par la scie à disque (4), **en ce qu'**elle comprend un autre moteur hydraulique (60) connecté en série au moteur (32), et **en ce qu'**elle comprend une conduite de dérivation (62) de l'autre moteur hydraulique (60) et des clapets anti-retour (61), les clapets anti-retour (61) étant disposés en parallèle sur la conduite de dérivation (62) et entre les moteurs hydrauliques (32, 60) de sorte que si le moteur (32) est alimenté pour inverser la rotation du corps de tambour (8), l'autre moteur hydraulique (60) est court-circuité.

10. Machine de coupe (1) pour éléments oblongs, selon l'une quelconque des revendications précédentes, **caractérisée en ce qu'**elle comprend un palier radial et axial (14) entourant le corps de tambour (8) pour monter le corps de tambour (8) sur le châssis (15).
